# DEMANDE DE BREVET EUROPEEN

(11) **EP 4 534 510 A2**
(43) Date de publication de la demande: **09.04.2025**
(21) Numéro de dépôt: 24204523.5
(22) Date de dépôt: 03.10.2024
(51) Int. Cl.: C04B 38/06, C01D 15/06, C03C 3/32, C04B 35/547, C04B 35/597, C04B 35/626, C04B 35/632, H01M 4/40

(54) **CÉRAMIQUE SOUFRÉE POREUSE, SON PROCÉDÉ DE PRÉPARATION ET SES UTILISATIONS**

(30) Priorité: 05.10.2023 FR 2310659
(71) Demandeur: Commissariat à l'Energie Atomique et aux Energies Alternatives, 75015 Paris (FR)
(72) Inventeur: BIECHER, Yohan, 38054 Grenoble cedex 09 (FR); PANAGET, Antonin, 38054 Grenoble cedex 09 (FR); LANDA, Matthieu, 38054 Grenoble cedex 09 (FR); PICARD, Lionel, 38054 Grenoble cedex 09 (FR)
(74) Mandataire: Gevers & Orès

(57) **Abrégé**

La présente invention concerne une céramique soufrée poreuse, son procédé de préparation et ses utilisations.

## Description

La présente invention concerne une céramique soufrée poreuse, son procédé de préparation et ses utilisations.

Dans le domaine des accumulateurs, les électrolytes conventionnels sont composés de solvants organiques dans lesquels sont dissouts des sels de métaux alcalins (Li, Na K, ...). L'utilisation de ces électrolytes limite fortement la densité énergétique des accumulateurs, notamment en raison de l'instabilité de ces électrolytes sur le Li métal, et présente un fort risque de sécurité, les solvants utilisés étant généralement inflammables et toxiques.

L'utilisation d'électrolytes solides a pour vocation d'améliorer la sécurité et les performances électrochimiques des accumulateurs de nouvelles générations.

En effet, les électrolytes solides sont plus stables chimiquement, ne présentent pas de risque de fuite, et sont ainsi plus durables et plus sûres d'utilisation que les électrolytes conventionnels.

Trois grandes familles d'électrolytes solides sont décrites dans la littérature : les électrolytes solides polymères, les oxydes et les sulfures. Dans ces deux dernières familles, d'électrolytes solides sont typiquement sous la forme de céramiques, notamment de vitrocéramiques.

Les électrolytes solides oxydes présentent des conductivités ioniques intéressantes, ainsi qu'une grande stabilité thermique, mais sont limités par leur coût élevé et par une mise en forme difficile. Les électrolytes solides sulfures présentent des conductivités ioniques du même ordre de grandeur que celle des électrolytes liquides mais leurs stabilités électrochimiques sont très restreintes. Les électrolytes solides polymères possèdent de bonnes propriétés aux interfaces avec les électrodes, sont avantageux en termes de coût de fabrication et de poids, mais leur conductivité ionique à température ambiante est très faible, nécessitant un usage en température.

Afin d'améliorer la conductivité ionique des électrolytes polymères, de nombreuses études s'intéressent à la réalisation d'électrolytes composites. Ces électrolytes sont composés d'une matrice conductrice polymère (un électrolyte polymère solide) et d'une matrice inorganique conductrice (ou non).

Cependant, dans le cadre de ces électrolytes composites, l'utilisation de matrices inorganiques de type céramique oxyde ou sulfure ne donne pas, sans structuration, une conductivité ionique convenable.

En outre, les céramiques sulfures (aussi connues sous le nom de céramiques soufrées) sont extrêmement sensibles à l'humidité et à l'air, et sont incompatibles avec de nombreux produits chimiques. Ceci rend toute tentative de structuration des plus difficiles.

Dans ce contexte, une étude a relaté la réalisation d'électrolytes composites utilisant une matrice 3D poreuse continue d'argyrodite, synthétisée par sublimation de SeS₂ lors d'une étape de frittage à 550°C pendant 5 heures. Toutefois, la conductivité de l'argyrodite obtenue après sublimation est faible en comparaison de l'argyrodite de départ (0,22 mS.cm⁻¹ contre 2,04 mS.cm⁻¹ pour l'argyrodite seule). En outre, le disulfure de sélénium est un composé présentant une toxicité aigüe, sa manipulation étant ainsi très contraignante. Enfin, la température nécessaire à l'obtention de la matrice poreuse est très élevée, ce qui rend le procédé correspondant désavantageux d'un point de vue économique et environnemental.

Un objectif de l'invention est ainsi de fournir une céramique soufrée comportant des pores, et ce, sans dégradation, pollution ou altération de sa structure atomique, ni de ses propriétés fonctionnelles, notamment sa conductivité ionique.

Un autre objectif de l'invention est de fournir un tel matériau à l'aide d'un procédé ne nécessitant pas de température élevée pour sa mise en oeuvre. Il s'agit ainsi d'un procédé pour lequel la consommation énergétique liée à la réalisation de la matrice poreuse réduite, ce qui est avantageux d'un point de vue économique et environnemental.

Un autre objectif de l'invention est de fournir un tel matériau à l'aide d'un procédé ne nécessitant pas de composé toxique pour sa mise en oeuvre.

Ainsi, l'invention concerne une céramique soufrée poreuse, laquelle a une conductivité supérieure ou égale à 5.10⁻⁴ S.cm⁻¹.

L'invention concerne également une céramique soufrée poreuse, laquelle a une conductivité supérieure ou égale à 5.10⁻⁵ S.cm⁻¹.

La conductivité de la céramique peut notamment être mesurée par spectroscopie d'impédance complexe. Cette technique, bien connue de l'homme du métier, est basée sur la caractérisation de la réponse d'un échantillon à une tension alternative sinusoïdale de fréquence variable. Typiquement, 10 mV ont été appliquée pour des fréquences allant de 1 kHz à 7 MHz.

Selon un mode de réalisation particulier, la présente invention concerne une céramique telle que définie précédemment, laquelle est choisie parmi les argyrodites lithiées, les verres et vitrocéramiques de type Li-P-S, les thio-LISICON (Lithium Superionic Conductor), notamment les composés de type Li₄₋ₓGe₁₋ₓPₓS₄₋ₓ ou Li₁₁₋ₓM₂₋ₓP₁₊ₓS₁₂ avec M=Ge, Sn et/ou Si, x étant compris entre 0 et 1, et leurs composites.

Selon un mode de réalisation particulier, la présente invention concerne une céramique choisie parmi verre 60Li₂S.40P₂S₅, verre 67Li₂S.33P₂S₅, verre 70Li₂S.30P₂S₅, verre 75Li₂S.25P₂S₅, verre 80Li₂S.20P₂S₅, verre 55(66Li₂S.33P₂S₅).45LiI, verre 95(60Li₂S.40SiS₂).5Li₃BO₃(Li₃AlO₃), verre 77(75Li₂S.25P₂S₅).33LiBH₄, verre 40Li₂S.28SiS₂.30LiI, verre 30Li₂S.26B₂S₃.33LiI, Li₇P₃S₁₁, analogue Li₇P₃S₁₁ de type Li₇P_{2.9}S_{10.85}Mo_{0.01}, analogue Li₇P₃S₁₁ de type Li₇P_{2.9}Mn_{0.1}S_{10.7}I_{0.3}, argyrodite Li₆PS₅Cl, argyrodite Li₆PS₅Br, argyrodite Li₆PS₅I, argyrodite Li₇PS₆, argyrodite Li₇Ge₃PS₁₂, argyrodite Li_{6.35}P_{0.65}Si_{0.35}S₅Br, argyrodite Li_{6.6}P_{0.4}Ge_{0.6}S₅I_{5.4}, thio-LiSICON de type Li_{3.25}Ge_{0.25}P_{0.75}S₄, analogue thio-LiSICON de type Li₄SnS₄, analogue thio LiSICON de type Li₁₁AlP₂S₁₂, analogue thio-LiSICON de type Li_{3.833}Sn_{0.833}As_{0.166}S₄, Li₁₀GeP₂S₁₂, analogue LGPS de type Li₁₀SnP₂S₁₂, analogue LGPS de type Li₁₀SiP₂S₁₂, analogue LGPS de type Li_{9.54}Si_{1.74}P_{1.44}S_{11.7}Cl_{0.3}, 70Li₂S.30P₂S₅-1,4-butanediol, 75Li₂S.25P₂S₅-PFPE, 77.5Li₂S.22.5P₂S₅-méthly-imine, (PEO₁₈-LiTFSI)-LGPS, (PEO₁₈-LiTFSI)-LGPS, β-Li₃PS₄ -LZNO, β-Li₃PS₄-Al₂O₃, β-Li₃PS₄-SiO₂, et β-Li₃PS₄-LLZO, et leurs composites.

Selon un mode de réalisation particulier, la présente invention concerne une céramique choisie parmi argyrodite Li₆PS₅Cl, argyrodite Li₆PS₅Br, argyrodite Li₆PS₅I, argyrodite Li₇PS₆, argyrodite Li₇Ge₃PS₁₂, argyrodite Li_{6.35}P_{0.65}Si_{0.35}S₅Br, argyrodite Li_{6.6}P_{0.4}Ge_{0.6}S₅I_{5.4}, et leurs composites.

Selon un mode de réalisation particulier, la céramique telle que définie précédemment comprend ou est constituée d'un composé de formule Li₆PS₅X, où X est Cl, Br ou I, le composé étant en particulier de formule Li₆PS₅Cl.

Selon un mode de réalisation particulier, la céramique telle que définie précédemment a une conductivité inférieure ou égale à 10⁻² S/cm.

Selon un mode de réalisation particulier, la céramique telle que définie précédemment a une conductivité comprise de 5.10⁻⁵ à 10⁻² S/cm.

Selon un mode de réalisation particulier, la céramique telle que définie précédemment a une conductivité comprise de 10⁻⁴ à 10⁻² S/cm.

Selon un mode de réalisation particulier, la céramique telle que définie précédemment a une conductivité comprise de 5.10⁻⁴ à 10⁻² S/cm.

Selon un mode de réalisation particulier, la céramique telle que définie précédemment a une conductivité comprise de 6.10⁻⁴, 7.10⁻⁴, 8.10⁻⁴, 9.10⁻⁴, 10⁻³, 2.10⁻³, 3.10⁻³, 4.10⁻³, ou 5.10⁻³ à 10⁻² S/cm.

Selon un mode de réalisation particulier, le volume total des pores est compris de 30 à 70 %, notamment de 40 à 60% du volume total de ladite céramique.

Selon un mode de réalisation particulier, la plus grande dimension des pores est comprise de 0,1 à 500 µm par exemple de 50 µm.

Selon un mode de réalisation particulier, la céramique telle que définie précédemment est un électrolyte solide.

Selon un mode de réalisation particulier, la céramique telle que définie précédemment est dépourvu de sélénium ou de composé comprenant du sélénium.

Par « dépourvu de », on entend notamment moins de 0,1, 0,01, voire 0,001% en masse par rapport à la masse totale de céramique, voire « totalement dépourvu de », c'est-à-dire « sans aucune trace de ».

Selon un autre, aspect, l'invention concerne également l'utilisation de cyclododécane pour rendre poreuse une céramique soufrée. En particulier, cette céramique soufrée poreuse ainsi obtenue est telle que définie précédemment.

Selon un mode de réalisation particulier, la présente invention concerne une céramique telle que définie précédemment, comprenant en sus, notamment dans tout ou partie des pores, du cyclododécane.

Selon un autre, aspect, l'invention concerne également un procédé de préparation d'une céramique telle que définie précédemment, lequel comprend une étape (i) de chauffage, notamment à une température supérieure ou égale à 40°C, d'un mélange comprenant la céramique soufrée et du cyclododécane.

Selon un mode de réalisation particulier, l'étape (i) se fait à une température comprise de 40 à 150°C, notamment de 40 à 100°C, par exemple à 40, 60, 80 ou 100°C environ.

La durée de l'étape (i) peut être déterminée de façon bien connue de l'homme du métier, notamment en fonction de la température.

La céramique peut notamment être pesée avant et après l'étape (i), afin de confirmer le cas échéant la sublimation du cyclododécane et déterminer son avancement.

Selon un mode de réalisation particulier, l'étape (i) se fait pendant une durée de 12 heures à 96 heures, par exemple pendant environ 48 heures, notamment à 40°C, ou pendant environ 24 heures, notamment à une température comprise d'environ 60 à environ 80°C.

Selon un mode de réalisation particulier, l'étape (i) se fait sous vide, en particulier dans un four à vide, par exemple à une pression comprise de 5×10⁻² mbar à 1 mbar.

Selon un mode de réalisation particulier, le mélange de l'étape (i) est obtenu à l'issue d'une étape (o) de mélange et éventuellement de broyage, de céramique soufrée, optionnellement au préalable sous forme de poudre, et de cyclododécane.

Selon un mode de réalisation particulier, l'étape (o) se fait à l'aide d'un mélangeur, par exemple un mélangeur planétaire, d'un mortier ou d'un broyeur, par exemple un broyeur planétaire.

Selon un mode de réalisation particulier, l'étape (i) est suivie d'une étape (ii) de frittage, en particulier à une température comprise de 100 à 550°C, par exemple à 550°C.

Cette étape de frittage est susceptible de permettre, si nécessaire, d'améliorer les propriétés mécaniques de la céramique poreuse.

Selon un mode de réalisation particulier, l'étape (i) est précédée d'une étape (o') de mise en forme du mélange, notamment sous pression.

Ladite étape (o') suit l'étape (o), lorsqu'elle existe.

Cette étape (o') peut être réalisée selon des modes opératoires bien connus de l'homme du métier. La forme obtenue peut par exemple être une pastille, un bloc, une plaque.

A titre d'illustration, le mélange peut être mis en forme de pastille, notamment à une pression d'environ 130MPa, par exemple pendant 3 minutes.

Selon un mode de réalisation particulier, l'étape (i) est suivie d'une étape (ii') de mise en forme de la céramique soufrée poreuse.

Cette étape peut précéder ou suivre l'étape (ii) lorsqu'elle existe.

Cette mise en forme de l'étape (ii') peut par exemple être réalisée par emporte-pièçage.

Selon un mode de réalisation particulier, l'étape (o') est réalisée, le mélange étant notamment réalisé sous forme de bloc ou de plaque, ainsi que l'étape (ii'), en particulier par emporte-piècage. Dans ce cas, l'étape (ii) peut également être réalisée, en particulier avant l'étape (ii).

Selon un autre aspect, l'invention concerne également l'utilisation d'une céramique soufrée poreuse telle que définie précédemment pour la préparation d'une céramique composite, en particulier un électrolyte solide composite.

Selon un mode de réalisation particulier, l'invention concerne un céramique soufrée poreuse telle que définie précédemment, comprenant en outre, notamment dans tout ou partie des pores, un polymère.

De tels polymères, bien connus de l'homme du métier, sont par exemple décrits par Liu et al. (Adv. Energy Mater. 2023, 13, 2300798) ou Mindemark et al. (Progress in Polymer Science 2018, 81, 114-143).

Selon un autre aspect, l'invention concerne également un procédé de préparation d'une céramique composite telle que définie précédemment, lequel comprend une étape (a) de polymérisation *in situ.*

Cette étape (a) peut comprendre les sous-étapes suivantes :
(a1) Injection d'une formulation polymérisable dans la matrice céramique conductrice poreuse ;
(a2) Polymérisation, notamment par traitement thermique, pour obtenir l'électrolyte composite.

Selon un mode de réalisation particulier, le procédé selon l'invention comprend les étapes suivantes :
(o') une étape de mise en forme d'un mélange comprenant céramique soufrée et cyclododécane, notamment sous pression, notamment pour obtenir un mélange comprenant céramique soufrée et de cyclododécane sous forme de bloc ou de plaque ;
(i) une étape de chauffage, notamment à une température supérieure ou égale à 40°C, du mélange obtenu à l'issue de l'étape (o') ;
(a) une étape de polymérisation *in situ* pour obtenir une céramique soufrée poreuse composite ;
(b) une étape de mise en forme de la céramique soufrée poreuse composite, par exemple par emporte-pièçage.

Selon un mode de réalisation particulier, l'étape (i) est suivie d'une étape (ii) de frittage, en particulier à une température comprise de 100 à 550°C, par exemple à 550°C.

Selon un mode de réalisation particulier, le procédé selon l'invention comprend les étapes suivantes :
(o') une étape de mise en forme d'un mélange comprenant céramique soufrée et cyclododécane, notamment sous pression, notamment pour obtenir un mélange comprenant céramique soufrée et de cyclododécane sous forme de bloc ou de plaque ;
(i) une étape de chauffage, notamment à une température supérieure ou égale à 40°C, du mélange obtenu à l'issue de l'étape (o') ;
(ii) une étape de de frittage, en particulier à une température comprise de 100 à 550°C, par exemple à 550°C ;
(a) une étape de polymérisation *in situ* pour obtenir une céramique soufrée poreuse composite ;
(b) une étape de mise en forme de la céramique soufrée poreuse composite, par exemple par emporte-pièçage.

Selon un mode de réalisation particulier, le procédé selon l'invention comprend les étapes suivantes :
(o) une étape de mélange et éventuellement de broyage, de céramique soufrée, optionnellement au préalable sous forme de poudre, et de cyclododécane ;
(o') une étape de mise en forme du mélange obtenu à l'issue de l'étape (o), notamment sous pression, notamment pour obtenir un mélange comprenant céramique soufrée et de cyclododécane sous forme de bloc ou de plaque ;
(i) une étape de chauffage, notamment à une température supérieure ou égale à 40°C, du mélange obtenu à l'issue de l'étape (o') ;
(a) une étape de polymérisation *in situ* pour obtenir une céramique soufrée poreuse composite ;
(b) une étape de mise en forme de la céramique soufrée poreuse composite, par exemple par emporte-pièçage.

Selon un mode de réalisation particulier, le procédé selon l'invention comprend les étapes suivantes :
(o) une étape de mélange et éventuellement de broyage, de céramique soufrée, optionnellement au préalable sous forme de poudre, et de cyclododécane ;
(o') une étape de mise en forme du mélange obtenu à l'issue de l'étape (o), notamment sous pression, notamment pour obtenir un mélange comprenant céramique soufrée et de cyclododécane sous forme de bloc ou de plaque ;
(i) une étape de chauffage, notamment à une température supérieure ou égale à 40°C, du mélange obtenu à l'issue de l'étape (o') ;
(ii) une étape de de frittage, en particulier à une température comprise de 100 à 550°C, par exemple à 550°C ;
(a) une étape de polymérisation *in situ* pour obtenir une céramique soufrée poreuse composite ;
(b) une étape de mise en forme de la céramique soufrée poreuse composite, par exemple par emporte-pièçage.

L'électrolyte solide composite formé peut être utilisé dans les accumulateurs de nouvelles générations (Li métal).

L'élaboration de l'électrolyte composite par polymérisation *in situ* peut être réalisée lors de l'assemblage de la cellule (batterie tout-solide). Ceci peut permettre si nécessaire une amélioration de la conductivité ionique (par rapport à celle du polymère) ainsi qu'une meilleure rétention de capacité en cyclage (en permettant de meilleures interfaces électrolyte / électrodes).

### DEFINITIONS

Tel qu'on l'entend ici, les plages de valeur sous forme de « x-y » ou « de x à y » ou « entre x et y » incluent les bornes x et y, les entiers compris entre ces bornes, ainsi que tous les autres nombres réels compris entre ces bornes. A titre d'exemple, « 1-5 », ou « de 1 à 5 » ou « entre 1 et 5 » désignent les entiers 1, 2, 3, 4 et 5, ainsi que tous les autres nombres réels compris entre 1 et 5. Les modes de réalisations préférés incluent chaque entier pris individuellement dans la plage de valeur, ainsi que toute sous-combinaison de ces entiers et tout ensemble de nombres réels compris entre ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

### EXEMPLES

### Exemple 1 : synthèse d'une matrice soufrée poreuse selon l'invention

Le protocole expérimental de réalisation de la matrice céramique soufrée poreuse peut être divisé en 3 étapes :
1. Un mélange 50/50 volumique (= 67,5/32,5 massique) d'argyrodite commerciale, Li₆PS₅Cl (fournisseur : NEI) et de cyclododécane est préparé en boite à gants. Le mélange est réalisé manuellement dans un mortier.
2. Le mélange est ensuite mis sous forme de pastille en appliquant une pression de 130 MPa pendant 3 minutes, à température ambiante. Des pastilles de différents diamètres et épaisseur peuvent être réalisées selon le moule utilisé. La pastille est placée dans un creuset en quartz puis dans un tube pour four à boule Buchi fermé hermétiquement dans la boite à gants.
3. Le tube est placé sous vide puis chauffé à 60°C. Après 24h, il est rentré en boite à gants afin de récupérer l'argyrodite poreuse formée. La masse de la pastille est mesurée afin de confirmer la sublimation totale ou partielle du cyclododécane.

Le mélange 50/50 volumique de cyclododécane et de LPSCl a permis d'obtenir une céramique présentant une porosité de 50%. Ce pourcentage de porosité peut être modifié en augmentant ou diminuant le ratio volumique entre le cyclododécane et le LPSCl, par exemple pour obtenir des valeurs de 40%, 50% ou 60%.

La température de sublimation peut être modifiée. Des expériences ont été menés avec succès à 40°C, 80°C et 100°C. La température de sublimation n'influence pas typiquement, la formation des porosités dans la céramiques (quantité, morphologie) mais a un impact sur la cinétique de sublimation (2jours nécessaire à 40°C contre 24h à 60 et 80°C).

Ce procédé permet de réduire la toxicité de l'agent porogène, de former des porosités dans la matrice céramique sans pollution ni altération de celle-ci à une température plus basse que celle de l'état de l'art.

Plusieurs pastilles de différentes dimensions ont été réalisées pendant l'étude. Le Tableau 1 montre deux cas, l'un présentant les résultats sur une pastille de 7 mm de diamètre et l'autre de 13 mm de diamètre. Dans les deux cas, une perte de masse d'environ 31.5 % est obtenue confirmant la sublimation presque totale du cyclododécane.

**Tableau 1 : Mise en évidence de la sublimation du cyclododécane par la perte de masse de la pastille après traitement thermique**

| **Diamètre de la pastille (mm)** | **Masse avant sublimation (mg)** | **Masse après sublimation (mg)** | **Perte de masse (mg)** | **Pourcentage perte de masse (%)** |
|---|---|---|---|---|
| 7 | 34,1 | 23,3 | 10,8 | 31,7 |
| 13 | 440,7 | 301,7 | 139 | 31,5 |

### Exemple 2 : analyses relatives à une matrice soufrée poreuse selon l'invention

Les pastilles obtenues à l'exemple 1 ont été analysées par Microscopie Electronique à Balayage afin d'observer les pores formés après sublimation du cyclododécane. Des pores sont visibles après sublimation confirmant la formation d'une argyrodite poreuse. Les porosités sont de l'ordre de 50 µm de longueur.

Une analyse complémentaire par EDX a permis de montrer que les proportions de P, S et Cl n'ont pas changés en surface de l'argyrodite avant et après sublimation suggérant qu'aucune réaction chimique ne se soit produite aux interfaces entre l'argyrodite et le cyclododécane. A noter que Li ne peut pas être détecté par EDX.

**Tableau 2 : Evolution des proportions sur les éléments composant les argyrodites (P,S et Cl) avant et après sublimation du cyclododécane.**

| **Eléments** | **Proportions atomiques de l'argyrodite seule (%)** | **Proportions atomiques de l'argyrodite poreuse (%)** |
|---|---|---|
| P | 15,7 | 15,4 |
| S | 71,2 | 71,2 |
| Cl | 13,1 | 13,4 |

Ne pouvant pas analyser par DRX la pastille directement, une synthèse d'argyrodite poreuse d'un gramme a été réalisée afin d'avoir suffisamment de poudre pour remplir le porte-échantillon étanche dédié. Une perte de masse de 32.3% a été mesurée après sublimation du cyclododécane. La pastille d'argyrodite poreuse a ensuite été broyée afin de remplir le porte-échantillon avec de la poudre. Le but est de vérifier qu'il n'y ait pas d'altération de l'argyrodite lors de la réalisation de la céramique poreuse par sublimation (formation de phases secondaires, changement de structure de l'argyrodite etc). La comparaison des données entre l'argyrodite avant et après sublimation du cyclododécane montre qu'aucune modification structurale à l'échelle atomique n'est observée, suggérant qu'il n'y a pas de réaction chimique entre les deux précurseurs utilisés dans nos conditions de synthèse. A noter qu'après affinements des deux diffractogrammes, le paramètre de maille équivaut à 9.85 Å pour les deux composés.

Enfin concernant la conductivité ionique, des mesures de spectroscopie d'impédance ont été réalisées sur une pastille d'argyrodite seule, sur une pastille de mélange 50/50 volumique argyrodite/cyclododécane et sur la même pastille après sublimation de l'agent porogène. Une pression de 50 MPa a été appliquée pour les mesures. Le Tableau 3 résume les valeurs de conductivité ionique obtenue sur les trois échantillons.

**Tableau 3 : Conductivités ioniques de l'argyrodite seule, du mélange argyrodite/cyclododécane et argyrodite poreuse sous une pression de 50 MPa**

| **Echantillons** | **Conductivité ionique (S/cm)** |
|---|---|
| Argyrodite seule | 2,3×10⁻³ |
| Mélange 50/50 volumique argyrodite/cyclododécane | 0,79×10⁻³ |
| Argyrodite poreuse | 1,2×10⁻³ |

Une diminution attendue de la conductivité ionique est mesurée après mélange avec le cyclododécane, non conducteur ionique. En revanche, l'argyrodite poreuse synthétisée selon l'invention présente une conductivité de 1,2 mS/cm bien supérieure à celle relative à des céramiques soufrées de l'art antérieur.

## Revendications

1. Céramique soufrée poreuse, laquelle a une conductivité supérieure ou égale à 5.10⁻⁴ S.cm⁻¹, ladite céramique soufrée étant choisie parmi les argyrodites lithiées, les verres et vitrocéramiques de type Li-P-S, les thio-LISICON, et leurs composites.

2. Céramique selon la revendication 1, laquelle est
constituée d'un composé de formule Li₆PS₅X, où X est Cl, Br ou I, le composé étant en particulier de formule Li₆PS₅Cl.

3. Céramique selon l'une quelconque des revendications précédentes, dans laquelle le volume total des pores est compris de 30 à 70 %, notamment de 40 à 60% du volume total de ladite céramique.

4. Céramique soufrée poreuse selon l'une quelconque des revendications précédentes, comprenant en outre, notamment dans tout ou partie des pores, un polymère.

5. Utilisation de cyclododécane pour rendre poreuse une céramique soufrée, ladite céramique soufrée étant choisie parmi les argyrodites lithiées, les verres et vitrocéramiques de type Li-P-S, les thio-LISICON, et leurs composites.

6. Procédé de préparation d'une céramique selon l'une quelconque des revendications 1 à 4, lequel comprend une étape (i) de chauffage, notamment à une température supérieure ou égale à 40°C, d'un mélange comprenant la céramique soufrée et du cyclododécane.

7. Procédé selon la revendication 5, dans lequel le mélange de l'étape (i) est obtenu à l'issue d'une étape (o) de mélange et éventuellement de broyage, de céramique soufrée, optionnellement au préalable sous forme de poudre, et de cyclododécane.

8. Procédé selon l'une quelconque des revendications 5 à 6, dans lequel l'étape (i) est suivie d'une étape (ii) de frittage, en particulier à une température comprise de 100 à 550°C, par exemple à 550°C.

9. Procédé selon l'une quelconque des revendications 5 à 7, dans lequel l'étape (i) est précédée d'une étape (o') de mise en forme du mélange, notamment sous pression.

10. Procédé selon l'une quelconque des revendications 5 à 9 d'une céramique selon la revendication 4, lequel comprend une étape (a) de polymérisation *in situ.*

11. Utilisation d'une céramique soufrée poreuse selon l'une quelconque des revendications 1 à 3 pour la préparation d'une céramique composite, en particulier un électrolyte solide composite.
